# EUROPEAN PATENT SPECIFICATION

(11) **EP 3 085 905 B1**
(45) Date of publication and mention of the grant of the patent: **18.10.2017**
(21) Application number: 16161971.3
(22) Date of filing: 23.03.2016
(51) Int. Cl.: F01K 23/10

(54) **TURBINE ENGINE WITH INTEGRATED HEAT RECOVERY AND COOLING CYCLE SYSTEM**
TURBINENTRIEBWERK MIT INTEGRIERTEM WÄRMERÜCKGEWINNUNGS- UND KÜHLKREISLAUFSYSTEM
MOTEUR À TURBINE AVEC RÉCUPÉRATION DE CHALEUR INTÉGRÉE ET SYSTÈME À CYCLE DE REFROIDISSEMENT

(30) Priority: 27.03.2015 US 201514671147
(43) Date of publication of application: 26.10.2016
(73) Proprietor: General Electric Company, Schenectady, NY 12345 (US)
(72) Inventor: FREUND, Sebastian Wlater, Niskayuna, NY New York 12309 (US)
(74) Representative: Lee, Brenda

(56) References cited:
- EP-A2- 2 455 591
- US-A1- 2012 128 463
- US-A1- 2014 150 443

## Description

### BACKGROUND

The present application relates generally to gas turbine engines and more particularly relates to a turbine engine with an integrated heat recovery and cooling cycle system for electric power production and efficient operation of the turbine engine in increased ambient temperature environments.

The overall efficiency and the power output of a gas turbine engine typically suffer during operation in increased ambient temperature environments. As an example, the LMS100 gas turbine engine offered by General Electric Company of Schenectady, New York is one of the most efficient gas turbine engines on the market and is often installed in a simple-cycle configuration without a bottoming cycle. The high efficiency of the LMS 100 is due to a compressor intercooler and a high turbine pressure ratio with low exhaust temperature. As with all gas turbine engines, performance of the LMS100 in increased ambient temperature environments may suffer without use of a cooling cycle, such as one providing inlet chilling and sufficiently low intercooler temperature. To provide such cooling, individual, non-integrated (electrically-driven vapor compression or absorption cycle inlet chillers and cooling towers may be included. The addition of these cooling components often results in a periphery of the engine that is large, costly and consumes parasitic power and vast quantities of water.

Alternative combined cycle gas turbine engines may include thermodynamic bottoming cycles to generate electricity from waste heat, such as steam or duel-reheat CO₂ bottoming cycles. Similar to the simple-cycle configuration of the LMS 100, CO₂ bottoming cycles may also suffer in performance in increased ambient temperature environments. CO₂ bottoming cycles may not have efficient provisions for compression and low-side pressure control in hot ambient conditions. Bottoming cycles typically do not integrate intercooling or inlet chilling. Adding individual, non-integrated standard (steam) bottoming cycles with (electric) inlet chilling does not take advantage of synergies or remove inlet chiller auxiliaries, and results in added cost and overall system complexity.
There is thus a desire for an improved heat recovery and cooling cycle system for use with a gas turbine engine. Preferably such an improved heat recovery and cooling cycle system may provide multiple functions and advantages in an integrated system that is able to be efficiently operated in increased ambient temperature environments. US 2012/0128463 describes a system in which a working fluid is used to cool an air inlet of a gas turbine.
US 2014/0150443 describes a gas turbine system comprising an integrated bottoming cycle, in which cooling and/or heating circuits are used to maximize overall plant efficiency and economics.

### BRIEF DESCRIPTION

These and other shortcomings of the prior art are addressed by the present disclosure, which provides a power generation system. The power generation system according to the invention is described by claim 1 and the method of operation of said system is described in claim 8. In accordance with an embodiment shown or described herein, provided is a power generation system comprising an integrated waste heat recovery and cooling cycle system, a condenser and a working fluid accumulator. The integrated waste heat recovery and cooling cycle system comprising a heat-to-power portion and an inlet cooling portion in fluid communication with the heat-to-power portion. The heat-to-power portion comprising a two-stage intercooled pump/compressor, one or more recuperators configured to receive a portion of a flow of working fluid, an exhaust heat recovery unit configured to receive the flow of working fluid and an expander disposed downstream of the exhaust heat recovery unit. The inlet cooling portion comprising a chiller expander, a chiller compressor coupled to the chiller expander, a motor coupled to the chiller compressor and an inlet air heat exchanger in fluid communication with, and intermediately positioned therebetween, the chiller expander and the chiller compressor. The inlet cooling portion is configured to receive a portion of the flow of working fluid. The condenser is in fluid communication with the heat-to-power portion and the inlet cooling portion. The working fluid accumulator is in fluid communication with the heat-to-power portion and the inlet cooling portion and configured to maintain a desired volume and pressure of the flow of working fluid in the integrated heat recovery and cooling cycle system.

In accordance with another embodiment shown or described herein, provided is a power generation system. The power generation system comprising a heat-to-power portion defining a first portion of a working fluid circulation loop and an inlet cooling portion defining a second portion of a working fluid circulation loop. The heat-to-power portion comprising a two-stage intercooled pump/compressor, a low temperature heat source, one or more recuperators, an exhaust heat recovery unit, and an expander. The low temperature heat source is configured to receive a first portion of a flow of working fluid from the two-stage intercooled pump/compressor., The working fluid comprises CO₂. The one or more recuperators are configured in parallel with the low temperature heat source to receive a second portion of the flow of working fluid. The exhaust heat recovery unit is disposed downstream of the low-temperature heat source and the one or more recuperators and configured to receive a combined flow of working fluid. The expander is disposed downstream of the exhaust heat recovery unit and configured to receive the combined flow of working fluid. The inlet cooling portion comprising a chiller, a chiller compressor, a motor and an inlet air heat exchanger. The chiller compressor is coupled to the chiller expander. The motor is coupled to the chiller compressor. The inlet air heat exchanger is in fluid communication with, and intermediately positioned therebetween, the chiller expander and the chiller compressor. The inlet cooling portion is configured to receive a portion of the flow of working fluid. The system further including a working fluid condenser in fluid communication with the heat-to-power portion and the inlet cooling portion and a working fluid accumulator coupled to the two-stage intercooled pump/compressor and configured to maintain a desired volume and pressure of the working fluid in the system.

In accordance with yet another embodiment shown or described herein, provided is an integrated heat recovery and cooling cycle system for use with a gas turbine engine. The integrated heat recovery and cooling cycle system comprising flow of working fluid, an inlet cooling portion, a heat-to-power portion, a working fluid condenser and an accumulator. The inlet cooling portion comprising a chiller expander, a chiller compressor coupled to the chiller expander, a motor coupled to the chiller compressor and an inlet air heat exchanger in fluid communication with, and intermediately positioned therebetween, the chiller expander and the chiller compressor. The inlet cooling cycle is configured for the passage therethrough of the flow of working fluid. The heat-to-power portion comprising a two-stage intercooled pump/compressor, a low temperature heat source comprising a gas turbine intercooler configured to receive a first portion of the flow of working fluid and one or more recuperators configured in parallel with the low temperature heat source to receive a second portion of the flow of working fluid. The working fluid condenser is in fluid communication with the heat-to-power portion and the inlet cooling portion. The heat-to-power portion and the inlet cooling portion are integrated at the working fluid condenser. The accumulator is in fluid communication with the heat-to-power portion and the inlet cooling portion and configured to maintain a volume and pressure of the flow of working fluid in the integrated heat recovery and cooling cycle system.

In accordance with yet another embodiment shown or described herein, provided is a method of operating an integrated heat recovery and cooling cycle system. The method comprising diverting a portion of a working fluid flow to a heat-to-power portion of the system, compressing/pressurizing the working fluid flow in the heat-to-power portion of the system, and heating the working fluid flow in an exhaust heat recovery unit and one or more recuperators in the heat-to-power portion of the system to provide a heated working fluid flow. The method further comprising driving a load by expanding the heated working fluid flow in the heat-to-power portion of the system, expanding the working fluid flow in the heat-to-power portion of the system, diverting a portion of the working fluid flow to an inlet cooling portion of the system, cooling an inlet air flow by heating the working fluid flow and compressing the working fluid flow.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of a gas turbine engine showing a compressor, a combustor, a turbine and a load in accordance with one or more embodiments shown or described herein; and
FIG. 2 is a schematic diagraph of a gas turbine engine with an integrated heat recovery and cooling cycle system, in accordance with one or more embodiments shown or described herein.

### DETAILED DESCRIPTION

Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term.

As used herein, the terms "may" and "may be" indicate a possibility of an occurrence within a set of circumstances; a possession of a specified property, characteristic or function. These terms may also qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances, an event or capacity can be expected, while in other circumstances the event or capacity cannot occur--this distinction is captured by the terms "may" and "may be".

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," and "the," are intended to mean that there are one or more of the elements. The terms "comprising," "including," and "having" are intended to be inclusive, and mean that there may be additional elements other than the listed elements. Furthermore, the terms "first," "second," and the like, herein do not denote any order, quantity, or importance, but rather are used to distinguish one element from another.

All ranges disclosed herein are inclusive of the endpoints, and the endpoints are combinable with each other. The terms "first," "second," and the like as used herein do not denote any order, quantity, or importance, but rather are used to distinguish one element from another. The use of the terms "a" and "an" and "the" and similar referents in the context of describing the invention (especially in the context of the following claims) are to be construed to cover both the singular and the plural, unless otherwise indicated herein or contradicted by context.

Embodiments of the invention described herein address the noted shortcomings of the state of the art. In accordance with the embodiments discussed herein, an improved turbine engine including an integrated heat recovery and cooling cycle system is described. The system improves increased ambient environment power output and efficiency of the turbine engine through inlet chilling, while providing the generation of additional power. The integration of the heat recovery and cooling cycle system eliminates the need for an intercooler cooling water system, as well as any inlet chiller condenser or absorption cycle. The integrated heat recovery and cooling cycle system uses CO₂ as the working fluid for inlet chilling, intercooling and exhaust heat recovery. In an embodiment, the heat recovery and cooling cycle may provide up to 14MW of net power at 40°C condenser/cooler temperature, while reducing the inlet temperature from 30°C to 15°C and the intercooler-high pressure compressor inlet to ∼45°C. The integrated heat recovery and cooling cycle system, provides cooling and thus increased power in increased ambient temperature environments, and more particularly in an ambient environment of greater than 0°C. During operation at ambient temperatures above 20°C, the heat recovery and cooling cycle system may operate as a Brayton cycle, enabled efficiently through a novel intercooled compression system with low pressure control and accumulator.

The exemplary integrated heat recovery and cooling cycle system as disclosed includes a combined heat-to-power and inlet cooling cycle with CO₂ as the working fluid. The system uses waste heat from a turbine engine intercooler, as well as from the exhaust, to generate power in a dual- or triple-expansion configuration with recuperators for preheating. Refrigeration for inlet cooling is provided by a split flow from a condenser/cooler going through an expander, an inlet air heat exchanger (evaporator) and a compressor that can be driven in part by the expander, before returning to the condenser. As used herein, the term "integrated" refers to certain elements of a power generation system that are combined or common to both the heat-to-power cycle and the inlet cooling cycle. As described herein both cycles use a common cooler/condenser, accumulator and control system.

In accordance with the exemplary embodiments of the present disclosure, the cooling, or refrigeration cycle is integrated with the heat-to-power cycle to allow higher efficient operation in increased ambient temperature environments with fewer components and reduced complexity compared to typical bottoming cycles and inlet chilling systems. The heat sources for power generation may include combustion engines, gas turbines, geothermal, solar thermal, industrial heat sources, or the like.

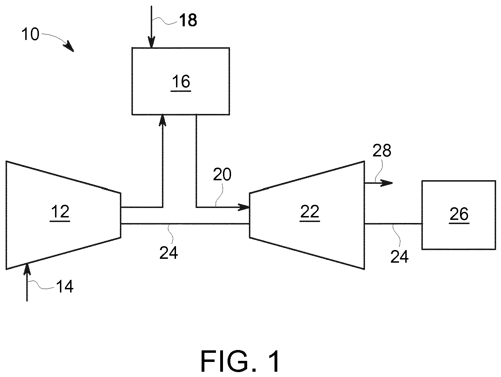

Referring now to the drawings, in which like numerals refer to like elements throughout the several views, FIG. 1 shows a schematic view of a gas turbine engine 10 as may be used herein. The gas turbine engine 10 may include at least one compressor 12. The at least one compressor 12 compresses an incoming flow of air 14 and delivers the compressed flow of air to a combustor 16. The combustor 16 mixes the compressed flow of air with a pressurized flow of fuel 18 and ignites the mixture to create a flow of combustion gases 20. Although only a single combustor 16 is shown, the gas turbine engine 10 may include any number of combustors 16. The flow of combustion gases 20 is in turn delivered to a turbine 22. The flow of combustion gases 20 drives the turbine 22 so as to produce mechanical work. The mechanical work produced in the turbine 22 drives the compressor 12 via a shaft 24 and an external load 26 such as an electrical generator and the like. A flow of hot exhaust gases 28 exits the turbine for further use. Moreover, multi-shaft gas turbine engines 10 and the like also may be used herein. In such a configuration, the turbine 22 may be split into a high pressure section that drives the compressor 12 and a low pressure section that drives the external load 26. Other configurations may be used herein.

In an embodiment the gas turbine engine 10 may be any number of different gas turbine engines offered by General Electric Company of Schenectady, New York, including, but not limited to, the LMS100, LM 2500, LM6000 aero-derivative gas turbines, E and F-class heavy duty gas turbine engines, and the like. However, the present disclosure is not limited thereto and can be applied to any suitable gas turbine, multiple gas turbine plants and other types of power generation equipment, such as internal combustion engines and/or industrial process equipment. In an embodiment, the gas turbine engine 10 may use natural gas, liquid fuels, various types of syngas, and/or other types of fuel. The gas turbine engine 10 may have different configurations and may use other types of components.

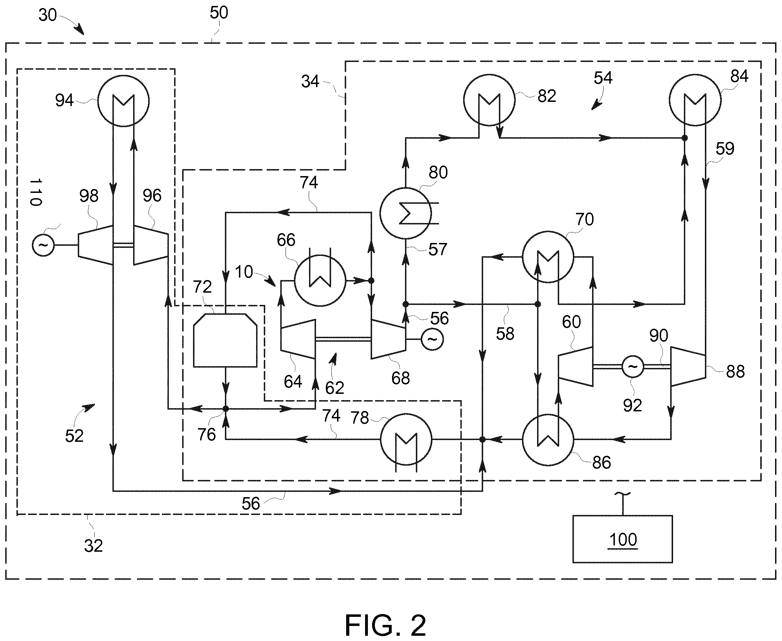

Referring to FIG. 2, a power generation system 30 is provided, based on some embodiments of the invention including the use of the gas turbine engine 10 (FIG. 1) with an integrated heat recovery and cooling cycle system 50. The system 30, and more particularly, the integrated heat recovery and cooling cycle system 50 includes a first portion of a working fluid circulation loop or a first loop 32, defining an inlet cooling portion 52 and a second portion of a working fluid circulation loop or a second loop 34, defining a heat-to-power portion 54, and more particularly a recuperated carbon-dioxide cycle for waste heat recovery. The first loop 32 is integrated with the second loop 34. The first loop 32 and the second loop 34 can be viewed as beginning with a cooler/condenser 78. The power generation system 30, and more particularly the heat recovery and cooling cycle system 50 may be driven by a flow of working fluid 56, such as carbon dioxide (CO₂). Carbon dioxide has the advantage of being non-flammable, non-toxic, and able to withstand high cycle temperatures. Other types of working fluids, such as a hydrocarbon, a fluorinated hydrocarbon, a siloxane, ammonia, or the like may be used herein. A Brayton cycle system, a Rankine cycle system, or the like also may be used. During operation as a Rankine cycle, the cooler/condenser 78, instead of the accumulator 72, may assume the function of storing liquid excess fluid inventory. During operation as a Brayton cycle, such as in increased ambient temperature environments or during transients when complete condensation does not take place in the cooler/condenser 78 and it serves as a gas cooler rather than a vapor liquefier, an accumulator (described presently) is required to control the pressure and inventory mass in the system 30.
As illustrated in FIG. 2, in an embodiment, the integrated heat recovery and cooling cycle system 50, and more particularly the heat-to-power portion 54, includes a plurality of recuperators, expanders and heat exchangers arranged based on the principle of recuperated CO₂ cycles, such as a CO₂ Rankine cycle, such that remaining heat after expansion is used for heating pressurized working fluid, and more particularly the CO₂, before an exhaust heat recovery unit 84 and before a low-temperature expander 60. CO₂ Rankine cycles are discussed in commonly assigned, US Publication No. 2012/0174583, M. Lehar, "Dual Reheat Rankine Cycle System and Method Thereof". In an embodiment, the heat-to-power portion 54 is fed by a two-stage intercooled pump/compressor/motor, generally referenced 62, that includes a first compressor/pump 64, such as an intercooler 66, and a second compressor/pump 68.
The heat-to-power portion 54 may further include additional heat exchangers, and more particularly an aftercooler 80, a gas turbine intercooler 82 (for the LMS100 for instance), the exhaust heat recovery unit 84 and a high temperature recuperator 86, in addition to a high temperature turbo-expander 88. Prior to reaching the exhaust heat recovery unit 84, a first portion 57 of the flow of working fluid 56 is received by the intercooler 82 and a second portion 58 of the flow of working fluid 56 is received in parallel by the low-temperature recuperator 70. The gas turbine intercooler 82, the exhaust heat recovery unit 84 and the low-temperature recuperator 70 heat the working fluid therein and provide for a heated flow of working fluid 59. The cooling heat exchangers, and more particularly the intercooler 66 and aftercooler 80, may be cooled with air or water in the same manner as the cooler/condenser 78. During operation as a Brayton cycle, the volume and pressure of the working fluid 56 in the system is maintained actively with an accumulator 72 that is connected to an intermediate pressure flow 74 of the two-stage intercooled pump/compressor/motor 62 via a valve 76 and to an outlet of the cooler/condenser 78.

Under increased ambient temperatures no condensation takes place in the cooler/condenser 78 and the heat-to-power portion 54 operates as a Brayton cycle with significantly higher optimum low-side pressure (e.g. from 70 bar at 15°C to 90 bar at 30°C).

As previously indicated, the integrated heat recovery and cooling cycle system 50 includes one or more recuperators, and more particularly, the low temperature recuperator 70 and the high temperature recuperator 86. The recuperators 70, 86 may be used to pre-cool the flow of working fluid (CO₂) 56 before the cooler/condenser 78 and recycle the heat. The recuperators 70, 86 may be in communication with the flow of pressurized working fluid 56 from the high-pressure pump/compressor 68 and the turbo-expanders 60 and 88. The turbo-expanders 60 and 88 may be radial inflow and/or axial turbines, or the like. The turbo-expanders 60 and 88 may drive an expander shaft 90. The expander shaft 90 may drive a load, such as an additional generator 92, and the like. Although the low-temperature turbo-expander 60 and high-temperature turbo-expander 88 are shown on the same shaft 90 with the additional generator 92, individual shafts and generators are anticipated by this disclosure. Other components and other configurations also may be used herein.

For gas turbine inlet cooling, an inlet air heat exchanger (evaporator), 94 is included. The inlet air heat exchanger (evaporator) 94 may be intermediately positioned between a chiller expander 96 and a chiller compressor 98 coupled to a motor 110. Refrigeration for inlet cooling is provided by a portion of the flow of the working fluid 56 from the cooler/condenser 78 going through the chiller expander 96, the inlet air heat exchanger (evaporator) 94 and the chiller compressor 98 that is driven in part by the chiller expander 96, before returning to the cooler/condenser 78. In alternate embodiments, individual compressor, motor, expander and generator units are anticipated for the chiller cycle in lieu of the combined unit shown.
Operation of the integrated heat recovery and cooling cycle system 50 may be controlled by a controller 100. The heat recovery and cooling cycle system controller 100 may be in communication with the overall controller of the gas turbine engine 10 and the like. The heat recovery and cooling cycle system controller 100 may be a rules based controller that controls the flow rate of the working fluid 56 through the inlet cooling heat exchanger 94 by diverting a portion of the flow of working fluid (CO₂) 56 from the cooler/condenser 78 as long as net power or efficiency increment for the overall system is positive The heat recovery and cooling cycle system controller 100 integrates the performance of all of the equipment including the gas turbine engine and the operational parameters for efficient use of the fuel and/or for maximum total power output through inlet chilling for operation in increased ambient temperature environments. Other types of rules and operational parameters may be used herein.
Other heat sources such as industrial waste heat, solar and/or geothermal heating of the flow of working fluid (CO₂) 56 may also be incorporated herein. Other types of heating and/or cooling also may be performed herein.
The overall integration of the integrated heat recovery and cooling cycle system 50 and the turbine components herein provides a more cost effective approach in maximizing output in increased ambient temperature environments as compared to separate bottoming cycle systems and heating and/or chilling systems. The rules based controller 100 may optimize the various heating and cooling flows for any given set of ambient conditions, load demands, fuel costs, water costs, and overall equipment configurations and operational parameters for efficient and economical use of the waste heat produced herein.

It should be apparent that the foregoing relates only to certain embodiments of the present application and the resultant patent. Numerous changes and modifications may be made herein by one of ordinary skill in the art without departing from the scope of the invention as defined by the following claims.

Although, the above embodiments are discussed with reference to carbon dioxide as the working fluid, in certain other embodiments, other low critical temperature working fluids suitable for use are also envisaged. In accordance with the exemplary embodiment, Rankine cycles employing carbon dioxide as the working fluid may have a compact footprint, small turbomachinery, low inventory and consequently faster ramp-up time than Rankine cycles employing steam as the working fluid.

While only certain features of the invention have been illustrated and described herein, many modifications and changes will occur to those skilled in the art. It is, therefore, to be understood that the appended claims are intended to cover all such modifications and changes.

## Claims

1. A power generation system (30), comprising:
an integrated waste heat recovery and cooling cycle system (50) comprising:
a heat-to-power portion (54) and an inlet cooling portion (52) in fluid communication with the heat-to-power portion (54),
wherein the heat-to-power portion (54) comprises a two-stage pump/compressor (62), an intercooler (66) disposed between a first stage (64) and a second stage (68) of the two-stage pump/compressor, one or more recuperators (70, 86) configured to receive a portion of a flow of working fluid (56), an exhaust heat recovery unit (84) configured to receive the flow of working fluid (56) and an expander (88) disposed downstream of the exhaust heat recovery unit (84), and
wherein the inlet cooling portion (52) comprises a chiller expander (96), a chiller compressor (98) coupled to the chiller expander (96), a motor (100) coupled to the chiller compressor (98) and an inlet air heat exchanger (94) in fluid communication with, and intermediately positioned therebetween, the chiller expander (96) and the chiller compressor (98), the inlet cooling portion (52) configured to receive a portion of the flow of working fluid (56),
a condenser (78) in fluid communication with the heat-to-power portion (54) and the inlet cooling portion (52); and
a working fluid accumulator (72) in fluid communication with the heat-to-power portion (54) and the inlet cooling portion (52), the accumulator being connected to receive a portion of the working fluid output by the intercooler (66), the working fluid accumulator being configured to maintain a desired volume and pressure of the flow of working fluid (56) in the integrated heat recovery and cooling cycle system (50).

2. The system (30) of Claim 1, wherein the inlet cooling portion (52) is configured for operation at ambient temperatures in excess of zero degrees Celsius.

3. The system (30) of Claim 1 or 2, wherein the heat-to-power portion (54) comprises a Brayton cycle system.

4. The system (30) of Claim 1 or 2, wherein the heat-to-power portion (54) comprises a Rankine cycle system.

5. The system (30) of Claim 1, 2, 3, or 4, further comprising a rules based controller (100) configured to control a flow rate of the flow of working fluid (56) through at least one of the inlet cooling portion (52) or the heat-to-power portion (54).

6. The system (30) of Claim 5, wherein the rules based controller (100) diverts at least a portion of the flow of working fluid (56) from the working fluid condenser (78) to the chiller expander (96) of the inlet cooling portion (52) and diverts another portion of the flow of working fluid (56) to the intercooler pump/compressor (64) of the heat-to-power portion (54).

7. The system (30) of any preceding Claim, further comprising a low temperature heat source (82) configured to receive a first portion (57) of a flow of working fluid(56) and wherein the one or more recuperators (70, 86) are configured in parallel with the low temperature heat source (82).

8. A method of operating the integrated heat recovery and cooling cycle system (50) of any preceding claim, comprising:
diverting a portion of the working fluid flow (56) to the heat-to-power portion (54) of the system (50);
compressing/pressurizing the working fluid flow (56) in the heat-to-power portion (54) of the system (50);
heating the working fluid flow (56) in the exhaust heat recovery unit (84) and the one or more recuperators (70, 86) in the heat-to-power portion (54) of the system (50) to provide a heated working fluid flow (56);
driving a load by expanding the heated working fluid flow (56) in the heat-to-power portion (54) of the system (50);
expanding the working fluid flow (56) in the heat-to-power portion (54) of the system (50);
diverting a portion of the working fluid flow (56) to the inlet cooling portion (52) of the system (50);
cooling the inlet air flow by heating the working fluid flow (56); and
compressing the working fluid flow (56).

9. The method of Claim 8, wherein heating the working fluid flow (56) further includes heating the working fluid (56) in a low-temperature heat source (82).

10. The method of Claim 8 or 9, further comprising maintaining a desired volume and pressure of the flow of working fluid (56) in the integrated heat recovery and cooling cycle system (50) utilizing the working fluid accumulator (72).

## Patentansprüche

1. Stromerzeugungsanlage (30), umfassend:
ein integriertes Wärmerückgewinnungs- und Kühlkreislaufsystem (50) umfassend: einen Wärme-zu-Strom-Abschnitt (54) und einen Einlasskühlungsabschnitt (52) in Fluidverbindung mit dem Wärme-zu-Strom-Abschnitt (54), der Wärme-zu-Strom-Abschnitt (54) umfassend eine zweistufige Pumpe/einen zweistufigen Verdichter (62), einen Zwischenkühler (66), der zwischen einer ersten Stufe (64) und einer zweiten Stufe (68) der zweistufigen Pumpe/des zweistufigen Verdichters angeordnet ist, einen oder mehrere Abhitzeverwerter/Wärmeaustauscher (70, 86), die derart ausgebildet sind, dass sie einen Teil des Arbeitsflüssigkeitsstroms (56) aufnehmen, eine Abgaswärmerückgewinnungseinheit (84), die derart ausgebildet ist, dass sie den Arbeitsflüssigkeitsstrom (56) aufnehmen, und ein Ausdehnungsgefäß (88), das der Abgaswärmerückgewinnungseinheit (84) nachgelagert angeordnet ist, und der Einlasskühlungsabschnitt (52) umfassend ein Kühlerausdehnungsgefäß (96), einen Kühlerverdichter (98), der mit dem Kühlerausdehnungsgefäß (96) gekoppelt ist, einen Motor (100), der mit dem Kühlerverdichter (98) gekoppelt ist, und einen Ansaugluftwärmetauscher (94) in Fluidverbindung mit, und angeordnet zwischen, dem Kühlerausdehnungsgefäß (96) und dem Kühlerverdichter (98), wobei der Einlasskühlungsabschnitt (52) derart ausgebildet ist, dass er einen Teil des Arbeitsflüssigkeitsstroms (56) aufnimmt, einen Kondensator (78) in Fluidverbindung mit dem Wärme-zu-Strom-Abschnitt (54) und dem Einlasskühlungsabschnitt (52); und einen Arbeitsflüssigkeitsspeicher (72) in Fluidverbindung mit dem Wärme-zu-Strom-Abschnitt (54) und dem Einlasskühlungsabschnitt (52), wobei der Speicher derart verbunden ist, dass er einen Teil der Arbeitsflüssigkeit, die vom Zwischenkühler (66) abgegeben wird, aufnimmt, wobei der Arbeitsflüssigkeitsspeicher derart ausgebildet ist, dass er eine gewünschte Menge und einen gewünschten Druck des Arbeitsflüssigkeitsstroms (56) im integrierten Wärmerückgewinnungs- und Kühlkreislaufsystem (50) aufrechterhält.

2. Anlage (30) nach Anspruch 1, wobei der Einlasskühlungsabschnitt (52) für einen Betrieb bei Umgebungstemperaturen von mehr als Null Grad Celsius ausgebildet ist.

3. Anlage (30) nach Anspruch 1 oder 2, wobei der Wärme-zu-Strom-Abschnitt (54) ein Brayton-Kreislaufsystem umfasst.

4. Anlage (30) nach Anspruch 1 oder 2, wobei der Wärme-zu-Strom-Abschnitt (54) ein Rankine-Kreislaufsystem umfasst.

5. Anlage (30) nach Anspruch 1, 2, 3 oder 4, ferner umfassend eine regelbasierte Steuerung (100), die so ausgebildet ist, dass sie eine Strömungsgeschwindigkeit des Arbeitsflüssigkeitsstroms (56) mindestens entweder durch den Einlasskühlungsabschnitt (52) oder durch den Wärme-zu-Strom-Abschnitt (54) steuert.

6. Anlage (30) nach Anspruch 5, wobei die regelbasierte Steuerung (100) mindestens einen Teil des Arbeitsflüssigkeitsstroms (56) vom Arbeitsflüssigkeitskondensator (78) zum Kühlerausdehnungsgefäß (96) des Einlasskühlungsabschnitts (52) umleitet, und einen anderen Teil des Arbeitsflüssigkeitsstroms (56) zur Zwischenkühlerpumpe/zum Verdichter (64) des Wärme-zu-Strom-Abschnitts (54) umleitet.

7. Anlage (30) nach einem der vorstehenden Ansprüche, ferner umfassend eine Niedrigtemperaturwärmequelle (82), die derart ausgebildet ist, dass sie einen ersten Teil (57) des Arbeitsflüssigkeitsstroms (56) aufnimmt, und wobei der eine oder die mehreren Abhitzeverwerter/Wärmetauscher (70, 86) parallel zur Niedrigtemperaturwärmequelle (82) ausgebildet sind.

8. Verfahren zum Betreiben des integrierten Wärmerückgewinnungs- und Kühlkreislaufsystems (50) nach einem der vorstehenden Ansprüche, umfassend:
das Umleiten eines Teils des Arbeitsflüssigkeitsstroms (56) zum Wärme-zu-Strom-Abschnitt (54) des Systems (50);
das Verdichten/Unter-Druck-Setzen des Arbeitsflüssigkeitsstroms (56) im Wärme-zu-Strom-Abschnitt (54) des Systems (50);
das Erwärmen des Arbeitsflüssigkeitsstroms (56) in der Abgaswärmerückgewinnungseinheit (84) und dem einen oder den mehreren Abhitzeverwertern/Wärmetauschern (70, 86) im Wärme-zu-Strom-Abschnitt (54) des Systems (50), um einen erwärmten Arbeitsflüssigkeitsstrom (56) bereitzustellen;
das Antreiben einer Last durch Ausdehnen des erwärmten Arbeitsflüssigkeitsstroms (56) im Wärme-zu-Strom-Abschnitt (54) des Systems (50);
das Ausdehnen des Arbeitsflüssigkeitsstroms (56) im Wärme-zu-Strom-Abschnitt (54) des Systems (50);
das Umleiten eines Teils des Arbeitsflüssigkeitsstroms (56) zum Einlasskühlungsabschnitt (52) des Systems (50);
das Kühlen des Ansaugluftstroms durch das Erwärmen des Arbeitsflüssigkeitsstroms (56); und das Verdichten des Arbeitsflüssigkeitsstroms (56).

9. Verfahren nach Anspruch 8, das Erwärmen des Arbeitsflüssigkeitsstroms (56) ferner umfassend das Erwärmen der Arbeitsflüssigkeit (56) in einer Niedrigtemperaturwärmequelle (82).

10. Verfahren nach Anspruch 8 oder 9, ferner umfassend das Beibehalten einer gewünschten Menge und eines gewünschten Drucks des Arbeitsflüssigkeitsstroms (56) im integrierten Wärmerückgewinnungs- und Kühlkreislaufsystems (50) durch Verwenden des Arbeitsflüssigkeitsspeichers (72).

## Revendications

1. Système générateur d'énergie (30) comprenant :
un système intégré de cycles de récupération de chaleur résiduaire et de refroidissement (50) comprenant :
une partie de conversion de chaleur en puissance (54) et une partie de refroidissement d'entrée (52) en communication fluidique avec la partie de conversion de chaleur en puissance (54),
dans lequel la partie de conversion de chaleur en puissance (54) comprend un ensemble de pompe/compresseur à deux étages (62), un refroidisseur intermédiaire (66) disposé entre un premier étage (64) et un second étage (68) de l'ensemble de pompe/compresseur à deux étages, un ou plusieurs récupérateurs (70, 86) configurés pour recevoir une partie d'un écoulement de fluide de travail (56), une unité de récupération de chaleur d'échappement (84) configurée pour recevoir l'écoulement de fluide de travail (56) et un expanseur (88) disposé en aval de l'unité de récupération de chaleur d'échappement (84), et
dans lequel la partie de refroidissement d'entrée (52) comprend un expanseur refroidisseur (96), un compresseur refroidisseur (98) couplé à l'expanseur refroidisseur (96), un moteur (100) couplé au compresseur refroidisseur (98) et un échangeur de chaleur d'air d'entrée (94) en communication fluidique avec l'expanseur refroidisseur (96) et le compresseur refroidisseur (98) et positionné de manière intermédiaire entre eux, la partie de refroidissement d'entrée (52) étant configurée pour recevoir une partie de l'écoulement de fluide de travail (56),
un condenseur (78) en communication fluidique avec la partie de conversion de chaleur en puissance (54) et la partie de refroidissement d'entrée (52) ; et
un accumulateur de fluide de travail (72) en communication fluidique avec la partie de conversion de chaleur en puissance (54) et la partie de refroidissement d'entrée (52), l'accumulateur étant raccordé pour recevoir une partie du fluide de travail délivrée par le refroidisseur intermédiaire (66), l'accumulateur de fluide de travail étant configuré pour maintenir un volume et une pression souhaités de l'écoulement de fluide de travail (56) dans le système intégré de cycles de récupération de chaleur et de refroidissement (50).

2. Système (30) selon la revendication 1, dans lequel la partie de refroidissement d'entrée (52) est configurée pour fonctionner aux températures ambiantes à plus de zéro degré Celsius.

3. Système (30) selon la revendication 1 ou 2, dans lequel la partie de conversion de chaleur en puissance (54) comprend un système à cycles de Brayton.

4. Système (30) selon la revendication 1 ou 2, dans lequel la partie de conversion de chaleur en puissance (54) comprend un système à cycles de Rankine.

5. Système (30) selon la revendication 1, 2, 3 ou 4, comprenant en outre un dispositif de commande basé sur des règles (100) configuré pour commander un débit de l'écoulement de fluide de travail (56) à travers au moins l'une de la partie de refroidissement d'entrée (52) ou de la partie de conversion de chaleur en puissance (54).

6. Système (30) selon la revendication 5, dans lequel le dispositif de commande basé sur des règles (100) dévie au moins une partie de l'écoulement de fluide de travail (56) du condenseur de fluide de travail (78) à l'expanseur refroidisseur (96) de la partie de refroidissement d'entrée (52) et dévie une autre partie de l'écoulement de fluide de travail (56) vers l'ensemble de pompe/compresseur (64) du refroidisseur intermédiaire (64) de la partie de conversion de chaleur en puissance (54).

7. Système (30) selon l'une quelconque des revendications précédentes, comprenant en outre une source de chaleur à basse température (82) configurée pour recevoir une première partie (57) d'un écoulement de fluide de travail (56) et dans lequel les un ou plusieurs récupérateurs (70, 86) sont configurés en parallèle avec la source de chaleur à basse température (82).

8. Procédé de fonctionnement du système intégré de cycles de récupération de chaleur et de refroidissement (50) selon l'une quelconque des revendications précédentes, comprenant :
la déviation d'une partie de l'écoulement de fluide de travail (56) vers la partie de conversion de chaleur en puissance (54) du système (50) ;
la compression/pressurisation de l'écoulement de fluide de travail (56) dans la partie de conversion de chaleur en puissance (54) du système (50) ;
le chauffage de l'écoulement de fluide de travail (56) dans l'unité de récupération de chaleur d'échappement (84) et dans les un ou plusieurs récupérateurs (70, 86) de la partie de conversion de chaleur en puissance (54) du système (50) pour fournir un écoulement de fluide de travail chauffé (56) ;
l'entraînement d'une charge par expansion de l'écoulement de fluide de travail chauffé (56) dans la partie de conversion de chaleur en puissance (54) du système (50) ;
l'expansion de l'écoulement de fluide de travail (56) dans la partie de conversion de chaleur en puissance (54) du système (50) ;
la déviation d'une partie de l'écoulement de fluide de travail (56) dans la partie de refroidissement d'entrée (52) du système (50) ;
le refroidissement de l'écoulement d'air d'entrée par chauffage de l'écoulement de fluide de travail (56) ; et
la compression de l'écoulement de fluide de travail (56).

9. Procédé selon la revendication 8, dans lequel le chauffage de l'écoulement de fluide de travail (56) comprend en outre le chauffage du fluide de travail (56) dans une source de chaleur à basse température (82).

10. Procédé selon la revendication 8 ou 9, comprenant en outre le maintien d'un volume et d'une pression souhaités de l'écoulement de fluide de travail (56) dans le système intégré de cycles de récupération de chaleur et de refroidissement (50) en utilisant l'accumulateur de fluide de travail (72).
